# EUROPÄISCHE PATENTSCHRIFT

(11) **EP 4 028 190 B1**
(45) Veröffentlichungstag und Bekanntmachung des Hinweises auf die Patenterteilung: **18.11.2026**
(21) Anmeldenummer: 20768606.4
(22) Anmeldetag: 10.09.2020
(51) Int. Cl.: B23B 31/117, F16J 15/10

(54) **SPANNFUTTER**
CHUCK
MANDRIN

(30) Priorität: 13.09.2019 DE 102019124758
(43) Veröffentlichungstag der Anmeldung: 20.07.2022
(73) Patentinhaber: Helmut Diebold GmbH&Co. Goldring-Werkzeugfabrik, 72417 Jungingen (DE)
(72) Erfinder: DIEBOLD, Helmut, 72379 Hechingen (DE)
(74) Vertreter: Pfiz, Thomas
(86) Internationale Anmeldenummer: PCT/EP2020/075305
(87) Internationale Veröffentlichungsnummer: WO 2021/048267

(56) Entgegenhaltungen:
- WO-A1-2015/107101
- DE-A1- 102012 101 672
- US-A- 3 664 676
- US-A1- 2010 270 757
- US-A1- 2015 174 721

## Beschreibung

Die Erfindung betrifft ein Spannfutter, insbesondere ein über Spannmittel betätigtes Kraftspannfutter, mit einem um eine Drehachse rotierend antreibbaren Grundkörper, der einen über eine Stirnöffnung zugänglichen hohlen Spannbereich zum Einspannen eines Werkzeugs aufweist, und einem stirnseitig an dem Grundkörper über Verbindungsmittel fixierten Düsenring, der über eine Mediumzuführung in dem Grundkörper im Bereich seiner hinteren Ringfläche mit einem flüssigen bzw. gasförmigen Medium beaufschlagbar ist und der an seiner vorderen Ringfläche mündende Düsenbohrungen zum Beaufschlagen des Rotationswerkzeugs mit dem Medium aufweist.

Aus der WO 2015/107101 A1 ist ein Spannfutter gemäß dem Oberbegriff des Anspruchs 1 bzw. ein Schrumpfspannfutter mit einem stirnseitig angeordneten Düsenring zur Kühlmittelbeaufschlagung eines Rotationswerkzeugs bekannt, bei welchem eine Dichtfläche des Düsenrings direkt gegen eine Stufenfläche einer Ringaussparung des Spannfutters anliegt. Solche Konstruktionen sind vor allem für thermisch stark beanspruchte Schrumpfspannfutter geeignet, wobei allerdings geschliffene Planflächen mit geringen Toleranzen erforderlich sind.

Ausgehend hiervon liegt der Erfindung die Aufgabe zugrunde, die im Stand der Technik bekannten Vorrichtungen weiter zu verbessern und eine für einen breiten Einsatz vorteilhafte und zuverlässig arbeitende Konstruktion anzugeben.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, eine optimierte Planflächendichtung zu schaffen. Demzufolge wird erfindungsgemäß vorgeschlagen, dass zwischen der hinteren Ringfläche des Düsenrings und dem Grundkörper eine scheibenförmige Flachdichtung eingespannt ist, welche Flachdichtung mit einem axialen Mediumdurchlass für das Medium versehen ist und gegen radialen Durchtritt des Mediums nach innen und außen abdichtet. Dadurch ergeben sich u.a. folgende besondere Vorteile:
- Es genügt eine Dichtung, die anstelle von zwei Einzeldichtungen wie O-Ringe die Abdichtung in Richtung Spannmittelbereich und in Richtung Spannbereich leistet und dabei einen Mediumdurchlass zum Düsenring hin erlaubt.
- Eine solche Flachdichtung lässt sich zwischen Planflächen einspannen und benötigt keinen Einstich bzw. keine Aufnahmenut, wodurch Bauraum eingespart wird.
- Aufgrund der Flachdichtung liegt der Düsenring nicht direkt an dem Spannfutter an. Die zwei Komponenten können aus unterschiedlichen Materialien bestehen, ohne dass ein Kontaktkorrosion entsteht.
- De Abdichtung über die Flachdichtung erfordert keine geschliffenen Planflächen, was Herstellkosten spart.
- Der Düsenring kann flexibel ausgetauscht werden, wobei ein einfacher Ersatz der Dichtung möglich ist.

Vorteilhafterweise liegt die Flachdichtung an einer den Auslass der Mediumzuführung begrenzenden Planfläche des Grundkörpers dichtend an, so dass keine Leckage im Auslassbereich der Medienzuführung auftritt.

In diesem Zusammenhang ist es auch von Vorteil, wenn die Flachdichtung eine gegen den Durchtritt des Mediums in den Spannbereich abdichtende, radial innenliegende Ringpartie aufweist, und wenn die Flachdichtung eine gegen den Durchtritt des Mediums in den Spannmittelbereich abdichtende, radial außenliegende Ringpartie aufweist.

Um komplexere Konturen zu schaffen, ist es vorteilhaft, wenn die Flachdichtung aus einem vorzugsweise wasserstrahlgeschnittenen Flachmaterialzuschnitt gebildet ist.

Für eine hinreichende Dichtwirkung bei zugleich kompakter Bauform ist es vorteilhaft, wenn die Flachdichtung eine Dicke im Bereich von 0,5 mm bis 2,0 mm aufweist.

Zur Schaffung besonderer Einsatzbeständigkeit, insbesondere gegen Öle, Lösungsmittel, Kraftstoff, Salzlösungen, Kühlschmierstoff etc. sowie für eine hohe Temperatur- und Druckfestigkeit ist es von Vorteil, wenn die Flachdichtung aus einem Faser-Kunststoff-Verbundmaterial, insbesondere einem mit Elastomeren gebundene Aramidfasern enthaltenden Dichtungsmaterial gebildet ist.

Um mit der Fixierung auch eine Zentrierung zu erreichen, ist es günstig, wenn die Flachdichtung mehrere in Winkelabständen voneinander angeordnete Zentrierlöcher für den Durchgriff der Verbindungsmittel aufweist.

Eine weitere besonders vorteilhafte Ausgestaltung sieht vor, dass der Düsenring über gewindeseitig in den Grundkörper eingreifende Schrauben als Verbindungsmittel fixiert ist. Die Verschraubung vereinfacht die Montage und erlaubt auch einen konstruktiv einfachen Aufbau des Düsenrings.

Vorteilhafterweise umfasst der Mediumdurchlass der Flachdichtung mehrere in Winkelabständen voneinander angeordnete, in Umfangsrichtung langgestreckte Kreisbogenlöcher, so dass eine Ringverteilung des Mediums auf kreisförmig angeordnete Düsenbohrungen erleichtert wird.

Eine weitere Verbesserung sieht vor, dass die Kreisbogenlöcher jeweils eine Locherweiterung aufweisen, die mit einer den Grundkörper durchsetzenden Axialbohrung der Mediumzuführung fluchtet.

Günstig ist es auch, wenn die Kreisbogenlöcher einen größeren radialen Abstand zu der Drehachse als die Locherweiterung besitzen. Dadurch lassen sich auch Reduzierhülsen für kleinere Werkzeugdurchmesser vorteilhaft einsetzen.

Für eine gleichmäßige Mediumverteilung ist es von Vorteil, wenn der Düsenring eine oder mehrere kreisbogenförmige Verteilernuten enthält, deren Nutöffnung von der hinteren Ringfläche begrenzt ist und von deren Boden die Düsenbohrungen ausgehen.

Vorteilhafterweise besitzt der Düsenring mehrere unter voneinander unterschiedlichen Anstellwinkeln bezüglich der Drehachse schräg angestellte Düsenbohrungen, so dass verschiedene Werkzeuglängen und -durchmesser vom Sprühstrahl abgedeckt sind.

Für eine weitergehende Abschirmung ist es von Vorteil, wenn der Düsenring durch eine O-Ring-Dichtung umfangsseitig abgedichtet ist.

Im Folgenden wird die Erfindung anhand des in der Zeichnung in schematischer Weise dargestellten Ausführungsbeispiels näher erläutert. Es zeigen
- Fig. 1 und 2: ein Kraftspannfutter mit einem rückseitig durch eine Flachdichtung abgedichteten Düsenring in perspektivischer Ansicht und im Axialschnitt;
- Fig. 3: einen vergrößerten Ausschnitt A aus Fig. 1;
- Fig. 4: die Flachdichtung in Draufsicht
- Fig. 5: den Düsenring in Rückseitenansicht;
- Fig. 6: den Düsenring in Vorderseitenansicht.

In dieser Anmeldung wird der Begriff "axial" auf eine Richtung in der Werkzeugdrehachse oder parallel dazu bezogen, während "radial" sich auf eine Richtung rechtwinklig zur Drehachse bezieht.

Das in der Zeichnung dargestellte Kraftspannfutter 10 umfasst einen um eine Drehachse 12 rotierend antreibbaren Grundkörper 14, einen darin über eine Stirnöffnung 16 zugänglichen hohlen Spannbereich 18 zum Einspannen des Schafts eines Werkzeugs 20, beispielsweise eines Bohrers oder Fräsers, einen stirnseitig an dem Grundkörper fixierten Düsenring 22, eine durch den Grundkörper 14 zu dem Düsenring 22 verlaufende Mediumzuführung 24 für ein flüssiges/gasförmiges Medium (Kühlschmierstoff) und einer zwischen dem Grundkörper 14 und dem Düsenring 22 angeordneten ringscheibenförmigen Flachdichtung 26.

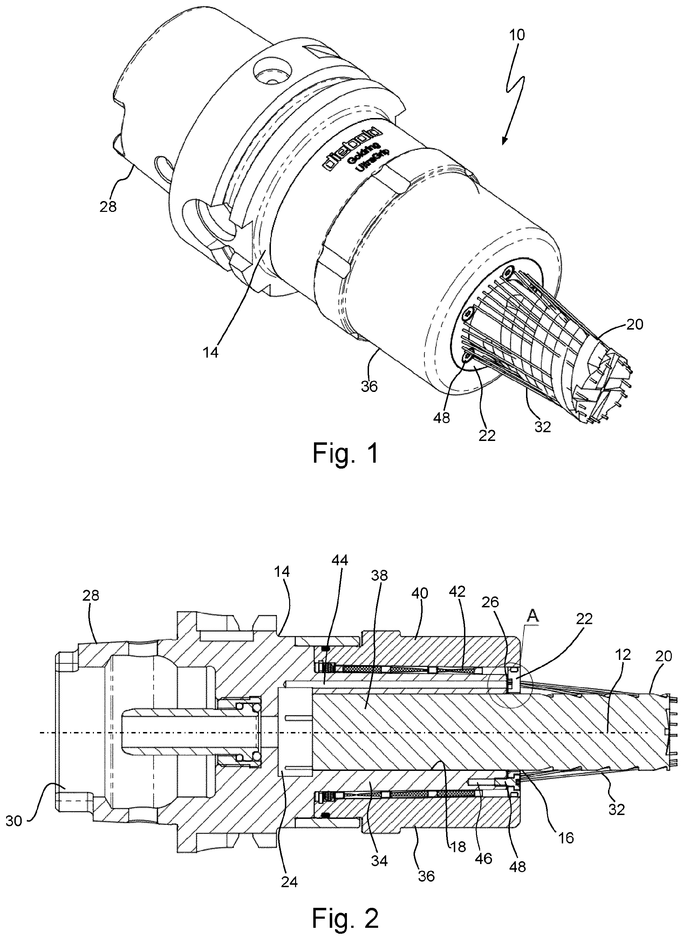

Wie aus Fig. 1 und 2 ersichtlich, besitzt das Kraftspannfutter 10 einen Hohlschaftkegel 28 zum Andocken an eine rotierende Maschinenspindel. Dessen Hohlraum 30 ermöglicht die maschinenseitige Zuführung von Kühlschmierstoff, der über das Kanalsystem der Mediumzuführung 24 und durch den Düsenring 22 hindurch in Form von Düsenstrahlen 32 auf das Rotationswerkzeug 20 zum Kühlen, Schmieren und Freiräumen des Arbeitsbereichs aufgedüst werden kann.

Das Kraftspannfutter 10 weist eine den zylindrisch hohlen Spannbereich 18 umgebende Hülsenpartie 34 auf, die über äußere Spannmittel 36 mit einer radial nach innen gerichteten Spannkraft beaufschlagbar ist, so dass der rückwärtige Schaft 38 des Werkzeugs 20 klemmend einspannbar ist. Zu diesem Zweck umfassen die Spannmittel 36 eine Spannhülse 40, die über Nadelrollen 42 drehbar auf der Hülsenpartie 34 gelagert ist. Aufgrund der Schrägstellung der Nadelrollen 42 ergibt sich beim Eindrehen der Spannhülse 40 ein gewindeartiger Kraftschluss, wie es an sich bekannt ist.

Die Mediumzuführung 24 verläuft längs der Hülsenpartie 34 über mehrere Axialbohrungen 44, die in Umfangsrichtung verteilt sind. In Winkelabständen zwischen den Axialbohrungen 44 sind stirnseitig an dem Grundkörper 14 offene axiale Gewindebohrungen 46 eingebracht, in welche Verbindungsmittel 48 in Form von Schrauben zur Fixierung des Düsenrings 22 eingreifen. Denkbar ist es auch, den Düsenring über ein Gewinde aufzudrehen oder einzuschweißen.

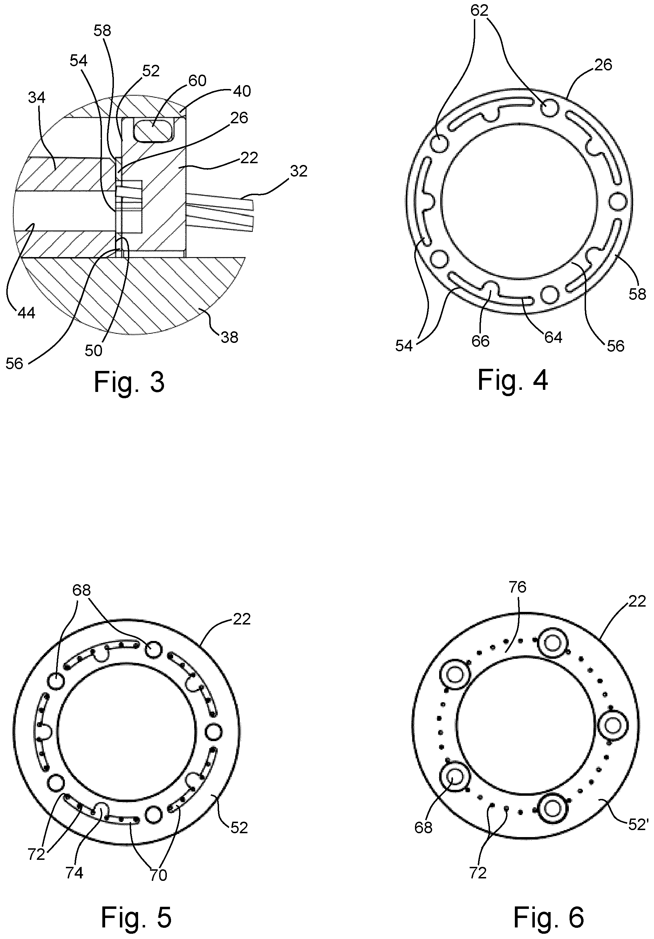

Wie am Besten aus Fig. 3 ersichtlich, ermöglicht die Flachdichtung 26 eine statische axiale Abdichtung an einander gegenüberliegenden Planflächen im Bereich der Medienüberleitung auf den Düsenring 22. Dabei liegt die Rückseite der Flachdichtung 26 an einer den Auslass der Axialbohrungen 44 begrenzenden Planfläche 50 des Grundkörpers 14 bzw. dessen Hülsenpartie 34 dichtend an, während die Vorderseite der Flachdichtung 26 an der hinteren Ringfläche 52 des Düsenrings 22 abdichtet. Um die Durchleitung des Mediums zu ermöglichen, besitzt die Flachdichtung 22 einen vollständig umrandeten axialen Mediumdurchlass 54, dessen Ausgestaltung weiter unten näher erläutert wird. Auf diese Weise ist die Flachdichtung 22 mit einer gegen den Durchtritt des Mediums in den Spannbereich 18 abdichtenden, radial innenliegenden Ringpartie 56 und einer gegen den Durchtritt des Mediums in den Bereich der Spannmittel 36 abdichtenden, radial außenliegenden Ringpartie 58 versehen.

Wie aus Fig. 3 weiter zu ersehen, ist der Düsenring 22 umfangsseitig durch eine O-Ring-Dichtung 60 an der Innenseite der Spannhülse 40 abgedichtet, so dass der Spannmittelbreich auch dort gegen Verschmutzung von außen abgeschirmt ist.

Zweckmäßig besteht die Flachdichtung 26 aus einem mit Elastomeren gebundene Aramidfasern enthaltenden Dichtungsmaterial und weist eine Dicke im Bereich von 0,5 mm bis 2,0 mm auf. Dabei wird die Flachdichtung 26 als Zuschnitt aus einem Flachmaterial zweckmäßig durch Wasserstrahlschneiden gebildet.

Wie in Fig. 4 gezeigt, weist die Flachdichtung 26 mehrere in Winkelabständen voneinander angeordnete Zentrierlöcher 62 für den Durchgriff der Schrauben 48 auf.

Daneben umfasst der Mediumdurchlass 54 der Flachdichtung 26 mehrere in Winkelabständen voneinander angeordnete, in Umfangsrichtung langgestreckte Kreisbogenlöcher 64. Diese weisen im Zentralbereich jeweils eine Locherweiterung 66 auf, die mit der zugeordneten Axialbohrung 44 in dem Grundkörper 14 fluchtet. Dabei besitzen die Locherweiterungen 66 einen geringeren Radialabstand zur Drehachse 12 als die Kreisbogenlöcher 64, so dass der Einsatz von Reduzierhülsen für geringere Werkzeugdurchmesser möglich ist, wie es unten näher erläutert wird.

In der Ansicht auf die hintere Ringfläche 52 des Düsenrings 22 gemäß Fig. 5 ist zu erkennen, dass dort die Öffnungskontur für die Mediumdurchleitung mit den oben beschriebenen Durchbrüchen der Flachdichtung 26 übereinstimmt. So korrespondieren Löcher 68 für die Schrauben 48 mit den Zentrierlöchern 62 in der Flachdichtung 26. Des Weiteren sind kreisbogenförmige Verteilernuten 70 vorgesehen, deren Nutöffnung von der hinteren Ringfläche 52 begrenzt ist und von deren Boden jeweils mehrere in Umfangsrichtung verteilte Düsenbohrungen 72 ausgehen. Die Verteilernuten 70 besitzen zentrale Nuterweiterungen 74, die mit den Locherweiterungen 66 der Flachdichtung 26 fluchten.

Wie aus Fig. 6 ersichtlich, münden die Düsenbohrungen 72 an der vorderen Ringfläche 52' des Düsenrings 22. Dabei können Gruppen von Düsenbohrungen 72 mit voneinander unterschiedlichen Anstellwinkeln bezüglich der Drehachse 12 schräg angestellt sein, so dass die Auftreffstelle der erzeugten Düsenstrahlen längs des Werkzeugs variiert.

In Fig. 6 ist ebenfalls erkennbar, dass durch den größeren radialen Abstand der Düsenbohrungen 72 im Vergleich zu den Nuterweiterungen 74 bezüglich der Drehachse 12 auf der vorderen Ringfläche 52' ein größerer Innenrand 76 als Gegenlager für einen Anschlagbund einer ggf. in den Spannbereich 18 eingesetzten Reduzierhülse zur Verfügung steht.

## Patentansprüche

1. Spannfutter, insbesondere über Spannmittel betätigtes Kraftspannfutter, mit einem um eine Drehachse (12) rotierend antreibbaren Grundkörper (14), der einen über eine Stirnöffnung (16) zugänglichen hohlen Spannbereich (18) zum Einspannen eines Werkzeugs (20) aufweist, und einem stirnseitig an dem Grundkörper (14) über Verbindungsmittel (48) fixierten Düsenring (22), der über eine Mediumzuführung (24) in dem Grundkörper (14) im Bereich seiner hinteren Ringfläche (52) mit einem flüssigen und/oder gasförmigen Medium beaufschlagbar ist und der an seiner vorderen Ringfläche (52') mündende Düsenbohrungen (72) zum Beaufschlagen des Werkzeugs (20) mit dem Medium aufweist, **dadurch gekennzeichnet, dass** zwischen der hinteren Ringfläche (52) des Düsenrings (22) und dem Grundkörper (14) eine scheibenförmige Flachdichtung (26) eingespannt ist, welche mit einem axialen Mediumdurchlass (54) für das Medium versehen ist und gegen radialen Durchtritt des Mediums nach innen und außen abdichtet.

2. Spannfutter nach Anspruch 1, **dadurch gekennzeichnet, dass** die Flachdichtung (26) an einer den Auslass der Mediumzuführung (24) begrenzenden Planfläche (50) des Grundkörpers (14) dichtend anliegt.

3. Spannfutter nach Anspruch 1 oder 2, **dadurch gekennzeichnet, dass** die Flachdichtung (26) eine gegen den Durchtritt des Mediums in den Spannbereich (18) abdichtende, radial innenliegende Ringpartie (56) aufweist.

4. Spannfutter nach einem der Ansprüche 1 bis 3, **dadurch gekennzeichnet, dass** die Flachdichtung (26) eine gegen den Durchtritt des Mediums in den Spannmittelbereich abdichtende, radial außenliegende Ringpartie (58) aufweist.

5. Spannfutter nach einem der Ansprüche 1 bis 4, **dadurch gekennzeichnet, dass** die Flachdichtung (26) aus einem vorzugsweise wasserstrahlgeschnittenen Flachmaterialzuschnitt gebildet ist.

6. Spannfutter nach einem der Ansprüche 1 bis 5, **dadurch gekennzeichnet, dass** die Flachdichtung (26) eine Dicke im Bereich von 0,5 mm bis 2,0 mm aufweist.

7. Spannfutter nach einem der Ansprüche 1 bis 6, **dadurch gekennzeichnet, dass** die Flachdichtung (26) aus einem Faser-Kunststoff-Verbundmaterial, insbesondere einem mit Elastomeren gebundene Aramidfasern enthaltenden Dichtungsmaterial gebildet ist.

8. Spannfutter nach einem der Ansprüche 1 bis 7, **dadurch gekennzeichnet, dass** die Flachdichtung (26) mehrere in Winkelabständen voneinander angeordnete Zentrierlöcher (62) für den Durchgriff der Verbindungsmittel (48) aufweist.

9. Spannfutter nach einem der Ansprüche 1 bis 8, **dadurch gekennzeichnet, dass** der Düsenring (22) über gewindeseitig in den Grundkörper (14) eingreifende Schrauben als Verbindungsmittel (48) fixiert ist.

10. Spannfutter nach einem der Ansprüche 1 bis 9, **dadurch gekennzeichnet, dass** der Mediumdurchlass (54) der Flachdichtung (26) mehrere in Winkelabständen voneinander angeordnete, in Umfangsrichtung langgestreckte Kreisbogenlöcher (64) umfasst.

11. Spannfutter nach Anspruch 10, **dadurch gekennzeichnet, dass** die Kreisbogenlöcher (64) jeweils eine Locherweiterung (66) aufweisen, die mit einer den Grundkörper (14) durchsetzenden Axialbohrung (44) der Mediumzuführung (24) fluchtet.

12. Spannfutter nach Anspruch 11, **dadurch gekennzeichnet, dass** die Kreisbogenlöcher (64) einen größeren radialen Abstand zu der Drehachse (12) als die Locherweiterung (66) besitzen.

13. Spannfutter nach einem der Ansprüche 1 bis 12, **dadurch gekennzeichnet, dass** Düsenring (22) eine oder mehrere kreisbogenförmige Verteilernuten (70) enthält, deren Nutöffnung von der hinteren Ringfläche (52) begrenzt ist und von deren Boden die Düsenbohrungen (72) ausgehen.

14. Spannfutter nach einem der Ansprüche 1 bis 13, **dadurch gekennzeichnet, dass** der Düsenring (22) mehrere unter voneinander unterschiedlichen Anstellwinkeln bezüglich der Drehachse (12) schräg angestellte Düsenbohrungen (72) aufweist.

15. Spannfutter nach einem der Ansprüche 1 bis 14, **dadurch gekennzeichnet, dass** der Düsenring (22) durch eine O-Ring-Dichtung (60) umfangsseitig abgedichtet ist.

## Claims

1. Chuck, in particular a power chuck actuated by clamping means, having a main body (14) which can be driven in rotation about an axis of rotation (12) and which has a hollow clamping region (18) accessible via an end opening (16) for clamping a tool (20), and a nozzle ring (22) which is fixed to the end face of the main body (14) by connecting means (48) and can be supplied with a liquid and/or gaseous medium via a medium supply (24) in the main body (14) in the region of its rear annular surface (52) and which has nozzle bores (72) opening at its front annular surface (52') for supplying the tool (20) with the medium,
**characterized in that** a disc-shaped flat seal (26) is clamped between the rear annular surface (52) of the nozzle ring (22) and the main body (14), which flat seal is provided with an axial medium passage (54) for the medium and seals against radial passage of the medium to the inside and outside.

2. Chuck according to claim 1, **characterized in that** the flat seal (26) seals against a plane surface (50) of the main body (14) which surface limits the outlet of the medium supply (24).

3. Chuck according to claim 1 or 2, **characterized in that** the flat seal (26) has a radially inner annular part (56) that seals against the passage of the medium into the clamping region (18).

4. Chuck according to any of claims 1 to 3, **characterized in that** the flat seal (26) has a radially outer annular part (58) that seals against the passage of the medium into the clamping means region.

5. Chuck according to any of claims 1 to 4, **characterized in that** the flat seal (26) is formed from a preferably water-jet-cut flat material cut-out.

6. Chuck according to any of claims 1 to 5, **characterized in that** the flat seal (26) has a thickness in the range from 0.5 mm to 2.0 mm.

7. Chuck according to any of claims 1 to 6, **characterized in that** the flat seal (26) is formed from a fiber-reinforced plastic composite material, in particular a seal material containing aramid fibers bound with elastomers.

8. Chuck according to any of claims 1 to 7, **characterized in that** the flat seal (26) has multiple centering holes (62) arranged at angular intervals from one another for the passage of the connecting means (48).

9. Chuck according to any of claims 1 to 8, **characterized in that** the nozzle ring (22) is fastened by screws as connecting means (48) which engage in the main body (14) on the threaded side.

10. Chuck according to any of claims 1 to 9, **characterized in that** the medium passage (54) of the flat seal (26) comprises multiple circular arc holes (64) arranged at angular intervals from one another and elongated in the circumferential direction.

11. Chuck according to claim 10, **characterized in that** the circular arc holes (64) each have a hole extension (66) which is aligned with an axial bore (44) of the medium supply (24) passing through the main body (14).

12. Chuck according to claim 11, **characterized in that** the circular arc holes (64) have a larger radial distance from the axis of rotation (12) than the hole extension (66).

13. Chuck according to any of claims 1 to 12, **characterized in that** the nozzle ring (22) contains one or more circular arc-shaped distributor grooves (70), the groove opening of which is limited by the rear annular surface (52) and from the bottom of which the nozzle bores (72) extend.

14. Chuck according to any of claims 1 to 13, **characterized in that** the nozzle ring (22) has multiple nozzle bores (72) angled at different angles of inclination from one another with respect to the axis of rotation (12).

15. Chuck according to any of claims 1 to 14, **characterized in that** the nozzle ring (22) is sealed circumferentially by an O-ring seal (60).

## Revendications

1. Mandrin de serrage, en particulier mandrin de serrage par force actionné par l'intermédiaire de moyens de serrage, comportant un corps de base (14) pouvant être entraîné en rotation autour d'un axe de rotation (12) et présentant une zone de serrage (18) creuse accessible par l'intermédiaire d'une ouverture frontale (16) et destinée au serrage d'un outil (20), et une bague de buse (22) fixée côté frontal au corps de base (14) par l'intermédiaire de moyens de liaison (48), laquelle bague de buse peut être alimentée en un fluide liquide et/ou gazeux par l'intermédiaire d'une conduite d'amenée de fluide (24) dans le corps de base (14) dans la zone de sa surface annulaire arrière (52) et présente des alésages de buse (72) débouchant sur sa surface annulaire avant (52') pour alimenter l'outil (20) en fluide, **caractérisé en ce qu'**entre la surface annulaire arrière (52) de la bague de buse (22) et le corps de base (14) est intercalé un joint plat (26) en forme de disque qui est pourvu d'un passage de fluide (54) axial pour le fluide et assure l'étanchéité contre le passage radial du fluide vers l'intérieur et vers l'extérieur.

2. Mandrin de serrage selon la revendication 1, **caractérisé en ce que** le joint plat (26) s'appuie de manière étanche contre une surface plane (50) du corps de base (14) délimitant la sortie de la conduite d'amenée de fluide (24).

3. Mandrin de serrage selon la revendication 1 ou 2, **caractérisé en ce que** le joint plat (26) présente une partie annulaire (56) située radialement à l'intérieur et assurant l'étanchéité contre le passage du fluide dans la zone de serrage (18).

4. Mandrin de serrage selon l'une des revendications 1 à 3,
**caractérisé en ce que** le joint plat (26) présente une partie annulaire (58) située radialement à l'extérieur et assurant l'étanchéité contre le passage du fluide dans la zone des moyens de serrage.

5. Mandrin de serrage selon l'une des revendications 1 à 4,
**caractérisé en ce que** le joint plat (26) est formé à partir d'une découpe de matériau plat de préférence découpée au jet d'eau.

6. Mandrin de serrage selon l'une des revendications 1 à 5,
**caractérisé en ce que** le joint plat (26) présente une épaisseur comprise dans la plage allant de 0,5 mm à 2,0 mm.

7. Mandrin de serrage selon l'une des revendications 1 à 6,
**caractérisé en ce que** le joint plat (26) est formé à partir d'un matériau composite fibre-matière plastique, en particulier d'un matériau d'étanchéité contenant des fibres d'aramide liées par des élastomères.

8. Mandrin de serrage selon l'une des revendications 1 à 7,
**caractérisé en ce que** le joint plat (26) présente plusieurs trous de centrage (62) disposés en étant espacés angulairement les uns des autres et destinés au passage des moyens de liaison (48).

9. Mandrin de serrage selon l'une des revendications 1 à 8,
**caractérisé en ce que** la bague de buse (22) est fixée par l'intermédiaire de vis servant de moyens de liaison (48) qui viennent en prise dans le corps de base (14) côté filetage.

10. Mandrin de serrage selon l'une des revendications 1 à 9,
**caractérisé en ce que** le passage de fluide (54) du joint plat (26) comprend plusieurs trous en arc de cercle (64) allongés dans la direction circonférentielle et disposés en étant espacés angulairement les uns des autres.

11. Mandrin de serrage selon la revendication 10, **caractérisé en ce que** les trous en arc de cercle (64) présentent respectivement un élargissement de trou (66) qui est aligné avec un alésage axial (44) de la conduite d'amenée de fluide (24) traversant le corps de base (14).

12. Mandrin de serrage selon la revendication 11, **caractérisé en ce que** les trous en arc de cercle (64) présentent une distance radiale par rapport à l'axe de rotation (12) supérieure à celle de l'élargissement de trou (66).

13. Mandrin de serrage selon l'une des revendications 1 à 12,
**caractérisé en ce que** la bague de buse (22) contient une ou plusieurs rainures de distribution (70) en forme d'arc de cercle, dont l'ouverture de rainure est délimitée par la surface annulaire arrière (52) et à partir du fond desquelles s'étendent les alésages de buse (72).

14. Mandrin de serrage selon l'une des revendications 1 à 13,
**caractérisé en ce que** la bague de buse (22) présente plusieurs alésages de buse (72) mis en place obliquement selon des angles d'attaque différents les uns des autres par rapport à l'axe de rotation (12).

15. Mandrin de serrage selon l'une des revendications 1 à 14,
**caractérisé en ce que** la bague de buse (22) est rendue étanche sur sa circonférence par un joint torique (60).
